# EUROPÄISCHE PATENTSCHRIFT

(11) **EP 1 353 021 B1**
(45) Veröffentlichungstag und Bekanntmachung des Hinweises auf die Patenterteilung: **07.02.2007**
(21) Anmeldenummer: 02406133.5
(22) Anmeldetag: 23.12.2002
(51) Int. Cl.: E04F 13/08, H02G 3/30, A47B 57/00, F16B 5/02

(54) **Vorrichtung zur lösbaren Befestigung einer Profilschiene an einer Wand**
Device for removable attachment of a profiled rail at a wall
Dispositif pour l'attachement amovible d'un rail profilé à une paroi

(30) Priorität: 04.03.2002 CH 3752002
(43) Veröffentlichungstag der Anmeldung: 15.10.2003
(73) Patentinhaber: ZURECON AG, CH-8003 Zürich (CH)
(72) Erfinder: Gerster, Max, Dr. oec., 8185 Winkel (CH)
(74) Vertreter: Luchs, Willi

(56) Entgegenhaltungen:
- DE-U- 8 802 075
- DE-U- 29 917 003
- US-A- 4 098 481

## Beschreibung

Die Erfindung betrifft eine Vorrichtung zur lösbaren Befestigung einer Profilschiene an einer Wand gemäss dem Oberbegriff des Anspruches 1. Eine derartige Vorrichtung ist beispielsweise aus US 4098481 bekannt.

Profilschienen mit Lochungen werden beispielsweise zur Befestigung von Rohren, Leitungen, Lüftungskanälen, Kabeln und für weitere Installationen verwendet. Sie werden in der Regel mit den Wänden, Säulen oder Mauerwerk durch ihre Lochungen verschraubt, derart, dass eine der Profilseiten direkt an der Wand anliegt. Die Lochungen dieser Profilseite stehen dann allerdings für Montagezwecke nicht mehr zur Verfügung. So können z.B. keine Einhänge-Ausleger an dieser Profilseite montiert werden. Beispielsweise eine im Querschnitt U-förmige Profilschiene muss daher so an der Wand angebracht werden, dass ihre offene Seite zur Wand gerichtet ist, d.h. ihre zwei parallelen Profilseiten an der Wand aufstehen und die dritte, gelochte Profilseite in einem Abstand zur Wand verläuft, damit ihre Lochungen für die Installationen (z.B. zum Einhängen von Auslegern) verwendet werden können. Durch Lochungen dieser Profilseite ragen auch die in der Wand verankerten Befestigungselemente bzw. Befestigungsschrauben hindurch, deren Muttern auf der Aussenseite der Profilschiene angezogen werden.

Bei dieser Anordnung besteht die Gefahr, dass es - im Bestreben, die Profilschiene ausreichend zu fixieren - bei starkem Anziehen der Befestigungselemente zu einer Verformung der Profilschiene kommt. Eine sich bietende Abhilfe - nämlich die Verwendung einer Distanzhülse - vermag allerdings ein weiteres, wesentliches Problem dieser Anordnung nicht zu lösen, nämlich die starke Biegebeanspruchung der Befestigungsschraube, die dadurch entsteht, dass sich der Krafteinführungspunkt der von der Profilschiene auf die Befestigungsschraube übertragenen vertikalen Querkraft in einem relativ grossen Abstand von der Wand entfernt befindet. Neben einer unerwünschten Verbiegung der Befestigungsschraube kann auch die Verankerung in der Wand beeinträchtigt werden.

Der vorliegenden Erfindung liegt die Aufgabe zugrunde, eine Vorrichtung der eingangs genannten Art zu schaffen, bei der die Gefahr der Profilverformung und der Beschädigung der Befestigungselemente durch die vertikäle Querkraft eliminiert ist und die herstellungs- und montagetechnisch einfach und kostengünstig ist.

Diese Aufgabe wird erfindungsgemäss durch eine Vorrichtung mit den Merkmalen des Anspruches 1 gelöst.

Weitere, bevorzugte Ausgestaltungen der erfindungsgemässen Vorrichtung bilden den Gegenstand der abhängigen Ansprüche.

Dadurch, dass die Profilschiene mit ihrer gelochten Profilseite auf einen dem Befestigungselement zugeordneten Stützteil aufhängbar und mittels des Befestigungselementes an dessen vordere Fläche andrückbar ist, wird die vertikale Querkraft von der Profilschiene optimal auf das Befestigungselement und teilweise über den Stützteil formschlüssig direkt in die Wand übertragen, wobei der Stützteil mit einer oberen Auflagefläche unmittelbar bei der Wand auf dem Befestigungselement aufliegt und mit seiner hinteren Fläche an der Wand abgestützt ist. Das Befestigungselement wird so nur einer sehr geringen Biegebeanspruchung ausgesetzt, und die Gefahr seiner Verbiegung oder der Beschädigung der Verankerung wird weitgehend eliminiert. Der mit dem Befestigungselement beim Anziehen ausgeübte Druck wird über den Stützteil auf die Wandfläche übertragen, wodurch die Profilschiene keiner Verformungsgefahr ausgesetzt wird.

Ein Ausführungsbeispiel der erfindungsgemässen Vorrichtung ist in der Zeichnung dargestellt und im folgenden näher beschrieben.

Es zeigen:
- Fig. 1: die erfindungsgemässe Vorrichtung im vertikalen Längsschnitt;
- Fig. 2: einen Schnitt nach Linie II-II in Fig. 1; und
- Fig. 3: einen Hauptteil der Vorrichtung nach Fig. 1 in perspektivischer Darstellung.

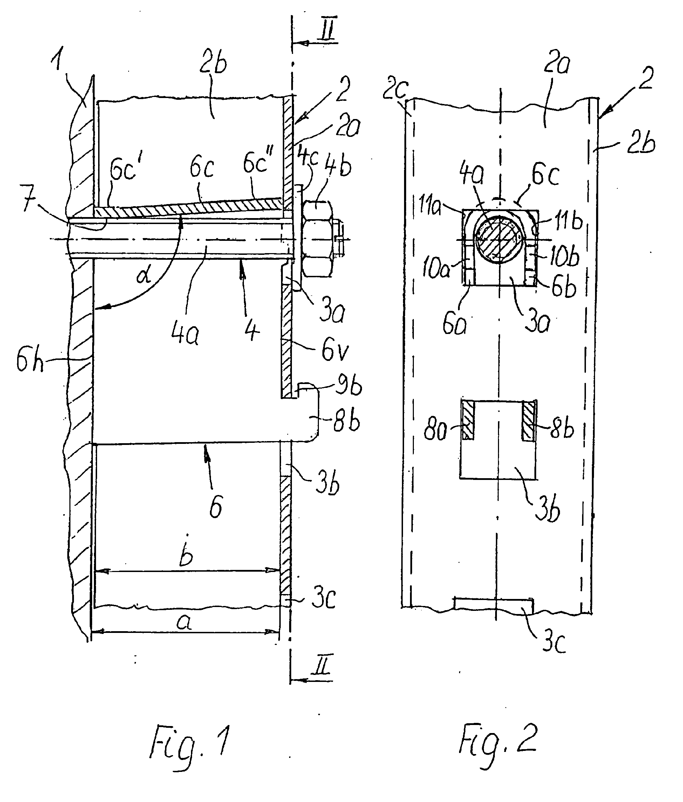

Fig.1 zeigt einen Abschnitt einer an der Wand 1 befestigten, im Querschnitt U-förmigen Profilschiene 2, der auch aus Fig. 2 ersichtlich ist. Die U-Profilschiene 2 weist zwei zueinander parallele und senkrecht zur Wand 1 angeordnete Profilseiten 2b, 2c sowie eine diese verbindende, parallel zur Wand 1 verlaufende Profilseite 2a auf. Die zur Wand 1 parallele Profilseite 2a ist mit einer Anzahl von beispielsweise quadratischen Lochungen versehen, von denen in Fig. 1 ünd 2 lediglich zwei voll und eine teilweise ersichtlich und mit 3a, 3b, 3c bezeichnet sind. Durch eine dieser Lochungen, nämlich die Lochung 3a, ragt ein Befestigungselement 4 hindurch, welches beim dargestellten Ausführungsbeispiel als ein in der Wand 1 in einer an sich bekannten und daher nicht näher dargestellten Weise verankerter Gewindebolzen 4a mit einer -von der Aussenseite der U-Profilschiene 2 aufschraubbaren Mutter 4b ausgebildet ist. Anstelle des verankerten (z.B. eingemörtelten) Gewindebolzens 4a könnte auch eine Dübelschraube verwendet werden.

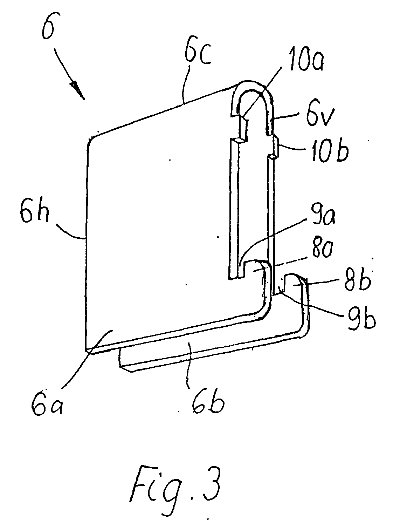

Auf das Befestigungselement 4 bzw. den Gewindebolzen 4a ist erfindungsgemäss von oben lose ein bügelförmiger Stützteil 6 - mit seinen beiden Schenkeln 6a, 6b nach unten gerichtet-aufgesetzt, der in Fig. 3 perspektivisch dargestellt ist. Der Stützteil 6 liegt gemäss Fig. 1 mit seinen hinteren Flächen 6h an der Wand 1 an. Der die beiden Stützteilschenkel 6a, 6b verbindende, obere Teil 6c weist eine halbzylindrische Form auf.

Er umfasst eine kurze, hintere Auflagefläche 7 mit dem Teil 6c', der parallel zum Gewindebolzen 4a verläuft, sowie einen an diesen anschliessenden Teil 6c", der mit der hinteren Stützteilfläche 6h einen Winkel α von etwas mehr als 90°, vorzugsweise etwa 95°, bildet, und der sich bis zu einer vorderen Fläche 6v (Fig. 1) des Stützteiles 6 erstreckt. Der Stützteil 6 liegt somit lediglich mit der sich unmittelbar bei der Wand 1 befindenden Auflagefläche 7 auf dem Gewindebolzen 4a auf.

Die beiden Stützteilschenkel 6a, 6b sind im unteren, vorderen Bereich mit vorstehenden Hakenteilen 8a, 8b mit je einer nach oben offenen Nut 9a, 9b versehen, wobei die vordere Stützteil-Fläche 6v die hintere Fläche der jeweiligen Nut 9a, 9b bildet. Die Breite der Nuten 9a, 9b ist etwas grösser als die Dicke der Profilseite 2a. Die U-Profilschiene 2 ist mit ihrer gelochten Profilseite 2a auf den Hakenteilen 8a, 8b aufgehängt, und zwar mit der quadratischen Lochung 3b, die unterhalb der für das Befestigungselement 4 vorgesehenen Lochung 3a liegt. An der Vorderseite des Stützteiles 6 bzw. seiner Schenkel 6a, 6b sind ferner im oberen Bereich kleine Vorsprünge 10a, 10b vorhanden, die in die obere, für das Befestigungselement 4 vorgesehene Lochung 3a hineinragen. Sie dienen im Zusammenwirken mit Seitenflächen 11a, 11b der Lochung 3a der seitlichen Positionierung der U-Profilschiene 2 und ggf. der zusätzlichen Auflage der Scheibe 4c beim Festziehen der Mutter 4b.

Der Abstand a zwischen der hinteren und der vorderen Fläche 6h, 6v des Stützteiles 6 ist etwas grösser als die Breite b der zur Wand 1 senkrechten, zueinander parallelen Profilseiten 2b, 2c (gemessen von der am Stützteil 6 anliegenden Innenseite der U-Profilschiene 2 bis zum der Wand 1 zugewandten Rand der parallelen Profilseiten 2b, 2c). Somit kann die U-Profilschiene 2 beim Anziehen des Befestigungselementes 4 bzw. seiner Mutter 4b über eine Scheibe 4c mit ihrer Profilseite 2a an die vordere Fläche 6v des Stützteiles 6 angedrückt und die auf das Befestigungselement 4 ausgeübte Zugkraft über den Stützteil 6 auf die Wand übertragen werden, ohne dass es zur Verformung der U-Profilschiene 2 kommt. Die Mutter 4b kann somit problemlos mit maximalem Drehmoment angezogen werden.

Dadurch, dass die U-Profilschiene 2 mit ihrer gelochten Profilseite 2a nicht vorne auf dem Gewindebolzen 4a aufliegt, sondern auf dem Stützteil 6 aufgehängt ist, der lediglich mit seiner unmittelbar bei der Wand 1 liegenden Auflagefläche 7 hinten auf dem Gewindebolzen 4a lastet, werden auch die vertikalen Querkräfte von der Profilschiene 2 optimal auf das Befestigungselement 4 und teilweise über den Stützteil 6 direkt auf die Wandfläche 1 übertragen. Dadurch wird der Gewindebolzen 4a praktisch keiner Biegebeanspruchung ausgesetzt, und die Gefahr seiner Verbiegung oder der Beschädigung der Verankerung ist weitgehend eliminiert.

Die U-Profilschiene 2 weist selbstverständlich ausser den zur Befestigung an der Wand 1 genutzten Lochungen 3a, 3b noch weitere, zu Montagezwecken vorgesehene Lochungen bzw. Öffnungen auf, von denen in Fig. 1 und 2 lediglich eine teilweise angedeutet ist (Lochung 3c). Diese können auch andere Formen als dargestellt aufweisen. Die dargestellte Ausführungsform des Stützteiles 6 ist für rechteckförmige Lochungen 3a, 3b zum Aufhängen der Profilschiene vorgesehen. Die Anzahl von für eine Profilschiene benötigten, mit den Stützteilen ausgerüsteten Befestigungselementen hängt von der Schienenlänge und von den zu übertragenden Kräften ab.

Die Stützteile könnten auch eine andere Form aufweisen als dargestellt, um dabei nur bei der Wand auf dem Befestigungselement aufzuliegen und die Profilschiene zu tragen. In der dargestellten Ausführungsform können die Stützteile 6 als einfache Stanzteile besonders kostengünstig hergestellt werden. Dadurch, dass die Muttern 4b auf der Aussenseite der Profilschienen 2 angeordnet und angezogen werden, können relativ grosse Befestigungselemente (Gewindebolzen oder Dübelschrauben) verwendet werden.

Anstelle der in Fig. 1 und 2 dargestellten, im Querschnitt U-förmigen Profilschiene 2 könnten auch andere Profilschienen in der erfindungsgemässen Art und Weise an der Wand angebracht werden. So könnten z.B. auch Profilschienen eines C- oder L-förmigen Querschnitts über eine von der Wand beabstandete, gelochte Profilseite mit der Wand verschraubt werden. Selbstverständlich können sowohl bei den U-Profilschienen als auch bei den C- oder L-Profilschienen auch die zur Wand senkrechten Profilseiten mit Montagelochungen versehen sein.

Die erfindungsgemässe Vorrichtung ist einfach und kostengünstig. Sie erlaubt eine Vormontage, d.h. ein rasches und sicheres Einhängen der Profilschienen in vorgängig angebrachte Befestigungsvorrichtungen. Zu diesem Zweck ist die Stützteil-Ausbildung mit vorstehenden Hakenteilen 8a, 8b von besonderem Vorteil, obwohl bezüglich der Kräfteübertragung auch nur einfache Stützteil-Vorsprünge, auf die die Profilschiene aufsteckbar bzw. aufgehängbar wäre, die gleiche Funktion übernehmen könnten.

Die erfindungsgemässe Befestigungsvorrichtung ist dank der relativ grossen Klemmlänge der Befestigungselemente auch bei Wechselbelastungen (Schwingungen, Wandvibrationen etc.) vorteilhaft.

## Patentansprüche

1. Vorrichtung zur lösbaren Befestigung einer Profilschiene (2) an einer Wand (1), wobei die Profilschiene (2) über eine von der Wand (1) beabstandete, mit einer Anzahl von Lochungen (3a, 3b, 3c) versehene Profilseite (2a) mittels mindestens eines durch eine dieser Lochungen (3a) hindurchragenden Befestigungselementes (4) mit der Wand (1) verbindbar ist, wobei
die Profilschiene (2) mit ihrer gelochten Profilseite (2a) auf einen dem Befestigungselement (4) zugeordneten Stützteil (6) aufhängbar ist, **dadurch gekennzeichnet, dass** die Profilschiene (2) mittels des Befestigungselementes (4) an die vordere Fläche des Stützteils (6v) andrückbar ist, wobei der Stützteil (6) mit einer oberen Auflagefläche (7) unmittelbar bei der Wand (1) auf dem Befestigungselement (4) aufliegt und mit seiner hinteren Fläche (6h) an der Wand (1) abgestützt ist.

2. Vorrichtung nach Anspruch 1, **dadurch gekennzeichnet, dass** das Befestigungselement (4) als ein in der Wand (1) verankerter Gewindebolzen (4a) oder eine Dübelschraube ausgebildet ist, mit einer auf der Aussenseite der Profilschiene (2) angeordneten Mutter (4b).

3. Vorrichtung nach Anspruch 1 oder 2, **dadurch gekennzeichnet, dass** der Stützteil (6) bügelförmig ausgebildet und von oben auf das Befestigungselement (4) aufsetzbar ist, wobei die beiden Stützteilschenkel (6a, 6b) im unteren, vorderen Bereich mit vorstehenden Teilen (8a, 8b) versehen sind, auf welche die Profilschiene (2) mit einer unterhalb der für das Befestigungselement (4) vorgesehenen Lochung (3a) angeordneten, weiteren Lochung (3b) aufhängbar ist.

4. Vorrichtung nach Anspruch 3, **dadurch gekennzeichnet, dass** die zum Aufhängen der Profilschiene (2) vorgesehenen Teile (8a, 8b) des Stützteiles (6) hakenförmig ausgebildet und mit einer nach oben offenen Nut (9a, 9b) versehen sind, wobei die vordere Stützteil-Fläche (6v), an welche die Profilschiene (2) andrückbar ist, die hintere Fläche der jeweiligen Nut (9a, 9b) bildet.

5. Vorrichtung nach Anspruch 3 oder 4, **dadurch gekennzeichnet, dass** der die beiden Stützteilschenkel (6a, 6b) verbindende Teil (6c) eine halbzylindrische Form aufweist und einen hinteren, die Auflagefläche (7) bildenden Teil (6c') sowie einen an diesen anschliessenden, sich bis zu der vorderen Stützteil-Fläche (6v) erstreckenden Teil (6c") umfasst, wobei der letztere mit der hinteren Stützteil-Fläche (6h) einen Winkel (α) von mehr als 90°, vorzugsweise etwa 95°, bildet.

6. Vorrichtung nach einem der Ansprüche 3 bis 5, **dadurch gekennzeichnet, dass** die beiden Stützteilschenkel (6a, 6b) im oberen Bereich mit nach vorne ragenden Vorsprüngen (10a, 10b) versehen sind, die beim Aufhängen der Profilschiene (2) in die für das Befestigungselement (4) vorgesehene Lochung (3a) der Profilschiene (2) hineinragen und in Zusammenwirkung mit Seitenflächen (11a, 11b) dieser Lochung (3a) für die seitliche Positionierung der Profilschiene (2) vorgesehen sind.

7. Vorrichtung nach einem der Ansprüche 1 bis 6, **dadurch gekennzeichnet, dass** eine im Querschnitt U-förmige, zur Wand hin offene Profilschiene (2) auf den Stützteil (6) aufhängbar ist, wobei der Stützteil (6) zwischen beide parallelen Profilseiten (2b, 2c) der Profilschiene (2) hineinragt und der Abstand (a) zwischen der hinteren und der vorderen Stützteil-Fläche (6h, 6v) grösser ist als die Breite (b) der beiden parallelen Profilseiten (2b, 2c), gemessen von der am Stützteil (6) anliegenden Innenseite der Profilschiene (2) bis zu dem der Wand (1) zugewandten Rand der parallelen Profilseiten (2b, 2c).

## Claims

1. Device for the disconnectable affixing of a profile rail (2) to a wall (1), whereby the profile rail (2) can be connected with the wall (1) by means of a profile side (2a) spaced apart from the wall (1) equipped with a number of holes (3a, 3b, 3c) via at least one fitting element (4) projecting through one of these holes (3a), whereby the profile rail (2) can be suspended from a support part (6) associated with the fitting element (4) with its holed profile side (2a), **characterised in that** the profile rail (2) can be pressed against the front surface (6v) of the support part by means of the fitting element (4), whereby the support part (6) lies on the fitting element (4) with an upper abutment surface (7) directly near the wall (1) and can be supported with its rear surface (6h) on the wall (1).

2. Device according to Claim 1, **characterised in that** the fitting element (4) takes the form of a threaded bolt (4a) anchored in the wall (1) or a rawlplug screw, with a nut (4b) positioned on the outer side of the profile rail (2).

3. Device according to Claim 1 or 2, **characterised in that** the support part (6) is arc-shaped and can be placed onto the fitting element (4) from above, whereby the two support part legs (6a, 6b) are equipped with projecting parts (8a, 8b) in the lower front area, from which the profile rail (2) can be supported via a further hole (3b) located below the hole (3a) envisaged for the fitting element (4).

4. Device according to Claim 3, **characterised in that** the parts (8a, 8b) of the support part (6) envisaged for suspending the profile rail (2) are hook-shaped and equipped with a groove (9a, 9b) that is open at the top, whereby the front support part surface (6v) against which the profile rail (2) can be pressed forms the relevant rear surface of the relevant groove (9a, 9b).

5. Device according to Claim 3 or 4, **characterised in that** the part (6c) connecting the two support part legs (6a, 6b) has a semi-cylindrical shape and comprises a rear part (6c') forming the abutment surface (7) as well as a part (6c") extending to the front support part surface (6v) adjacent to the same, whereby the latter forms an angle (α) of more than 90°, preferably approximately 95°, with the rear support part surface (6h).

6. Device according to one of the Claims 3 to 5, **characterised in that** the two support part legs (6a, 6b) are equipped with projections (10a, 10b) projecting forward in their upper area, the same projecting into the holes (3a) of the profile rail (2) envisaged for suspending the profile rail (2) on the fitting element (4), and co-operating with side surfaces (11a, 11b) of these holes (3a) envisaged for the side positioning of the profile rail (2).

7. Device according to one of the Claims 1 to 6, **characterised in that** profile rail (2) with a U-shaped cross-section that is open in the direction of the wall can be suspended from the support part (6), whereby the support part (6) projects between the two parallel profile sides (2b, 2c) of the profile rail (2) and the gap (a) between the rear and the front support part surface (6h, 6v) is larger than the width (b) of the two parallel profile sides (2b, 2c) measured from the internal side of the profile rail (2) abutting against the support part (6) up to the edge of the parallel profile sides (2b, 2c) facing the wall (1).

## Revendications

1. Dispositif de fixation amovible d'une glissière profilée (2) à une paroi (1), la glissière profilée (2) pouvant être reliée à la paroi (1) par un côté profilé (2a), distant de la paroi (1) et doté d'un certain nombre de perçages (3a, 3b, 3c), au moyen d'au moins un élément de fixation (4) saillant à travers l'un de ces perçages (3a), la glissière profilée (2) pouvant être suspendue par son côté profilé percé (2a) à une pièce de support (6) associée à l'élément de fixation (4), **caractérisé en ce que** la glissière profilée (2) est poussée contre la surface avant (6v) de la pièce de support au moyen de l'élément de fixation (4), la pièce de support (6) portant par sa surface d'appui supérieure (7) contre l'élément de fixation (4) tout près de la paroi (1) et étant supportée à sa face arrière (6h) par la paroi (1).

2. Dispositif selon la revendication 1, **caractérisé en ce que** l'élément de fixation (4) est conformé en boulon (4a) ancré dans la paroi (1) ou en goujon fileté, un écrou (4b) étant placé du côté extérieur de la glissière profilée (2).

3. Dispositif selon la revendication 1 au 2, **caractérisé en ce que** la pièce de support (6) est conformée en étrier et peut être placée depuis le haut sur l'élément de fixation (4), les deux branches (6a, 6b) de la pièce de support étant dotées, dans la région inférieure avant, de pièces saillantes (8a, 8b) sur lesquelles peut être accrochée la glissière profilée (2) comportant un autre perçage (3b) placé au-dessous du perçage (3a) destiné à l'élément de fixation (4).

4. Dispositif selon la revendication 3, **caractérisé en ce que** les pièces (8a, 8b) de la pièce de support (6), qui sont destinées à la suspension de la glissière profilée (2), sont conformées en crochets et sont dotées d'une gorge (9a, 9b) ouverte vers le haut, et la surface avant (6v) de la pièce de support, contre laquelle est poussée la glissière profilée (2), forme la surface arrière de la gorge respective (9a, 9b).

5. Dispositif selon la revendication 3 ou 4, **caractérisé en ce que** la pièce (6c), reliant les deux branches (6a, 6b) de la pièce de support, a une forme semi-cylindrique et comporte une partie arrière (6c'), formant la surface d'appui (7), ainsi qu'une partie (6c") se raccordant à la partie arrière (6c') et s'étendant jusqu'à la surface avant (6v) de la pièce de support, la dernière partie formant avec la surface arrière (6h) de la pièce de support un angle (α) de plus de 90°, avantageusement d'environ 95°.

6. Dispositif selon l'une des revendications 3 à 5, **caractérisé en ce que** les deux branches (6a, 6b) de la pièce de support sont dotées dans la région supérieure de saillies (10a, 10b), dirigées vers l'avant, qui font saillie dans le perçage (3a), destiné à l'élément de fixation (4), de la glissière profilée (2) lorsque la glissière profilée (2) est suspendue et qui sont destinées, en coopération avec des surfaces latérales (11a, 11b) de ce perçage (3a), au positionnement latéral de la glissière profilée (2).

7. Dispositif selon l'une des revendications 1 à 6, **caractérisé en ce qu'**une glissière profilée (2), de section en U et ouverte en direction de la paroi, est suspendue à la pièce de support (6), la pièce de support (6) saillant entre les deux côtés profilés parallèles (2b, 2c) de la glissière profilée (2) et la distance (a) entre les surfaces arrière et avant (6h, 6v) de la pièce de support est supérieure à la largeur (b) des deux côtés profilés parallèles (2b, 2c), mesurée depuis le côté intérieur, portant contre la pièce de support (6), de la glissière profilée (2) jusqu'au bord des côtés profilés parallèles (2b, 2c) qui est dirigé vers la paroi (1).
